# EUROPEAN PATENT APPLICATION

(11) **EP 1 375 558 A1**
(43) Date of publication of application: **02.01.2004**
(21) Application number: 02702907.3
(22) Date of filing: 12.03.2002
(51) Int. Cl.: C08G 63/12, B32B 27/36, B32B 27/40, C08G 18/32, C09D 167/00, C09D 175/04

(54) **COMPOSITE RESIN AND USE THEREOF**

(30) Priority: 30.03.2001 JP 2001098757
(71) Applicant: TOYO INK MFG. CO., LTD., Chuo-ku Tokyo 1040-0031 (JP)
(72) Inventor: KURIHASHI, T., c/o Toyo Ink Mfg. Co., Ltd., Tokyo 104-0031 (JP); TAKAMORI, K., c/o Toyo Ink Mfg. Co., Ltd., Tokyo 104-0031 (JP)
(74) Representative: Koepe, Gerd L., Dipl.-Chem.
(86) International application number: PCT/JP2002/002302
(87) International publication number: WO 2002/081542

(57) **Abstract**

This invention discloses a composite resin prepared by reacting a monool (a) containing a C₂₅₋₂₀₀ hydrocarbon group; a multifunctional compound (G) containing a functional group capable of reacting with a hydroxyl group of the monool (a); and a compound (H) having a functional group capable of reacting with the functional group in the multifunctional compound (G) , as well as uses thereof. The composite resin of the invention serves as an excellent interface modifier upon incorporation into a film-coating material such as ink or paint or into a molding material. The modifier can modify not only the interface between the film-forming material or the like and abase material but also the surf ace of the film-formingmaterial, that is, the interface between the film-forming material and the air.

## Description

This application claims a priority right based on Japanese Patent Application No. 2001-98757 (filing date: March 30, 2001) previously filed by the present applicant, and the disclosure of this prior application is incorporated herein by reference.

### BACKGROUND OF THE INVENTION

### 1. Field of the Invention

This invention relates to a composite resin obtained by chemically binding a predetermined alcohol to a polyester or polyurethane and use thereof.

### 2. Description of the Related Art

Polyolefin type materials such as polyethylene and polypropylene are used for various purposes from the view point of price and processability. However, these materials are poor in compatibility with a film-forming material such as ink and paint orwith a tackifier and an adhesive, because of lowpolarity and high crystallinity of the resin itself, and sufficient adhesion is difficult to achieve.

As a means of solving these problems, a method of forming a primer by applying a polypropylene chloride onto an olefin surface (JP-B 7-79990) or a method of attaining adhesion or an improvement of adhesion effects by incorporating the chloride into a film-forming material has been used widely. In these methods, however, the halide is used and thus special consideration is required for incineration etc. after use.

Further, there is also a method wherein a polyolefin compound having polar moieties introduced partially therein by grafting an unsaturated carboxylic acid such as maleic anhydride onto polypropylene or polyethylene in the presence of a radical polymerization initiator is incorporated into a film-coating material. In this method, however, the degree of introduction of maleic anhydride is difficult, and high adhesion or an improvement of adhesion effects is difficult to achieve. Further, efficient production of modified polyolefins with a high degree of introduction is difficult.

To modify the surface of ink or paint, a large number of conventional methods are known. For example, there is a method of modifying surface characteristics by bleeding a modifier from paint onto the surface of the resultant film to cover the surface of the film with the modifier. This method is a general method and used for various purposes. The modifier used in this method includes natural fats and oils such as carnauba wax and palm oil, fatty acids such as stearic acid, and synthetic wax such as silicone oil, polyethylene, polypropylene and Teflon.

However, the duration and usable conditions of a material whose surface was modified by this method are limited because the modifier thus bled merely remains on the surface of the material.

As the awareness of environmental problems has been increased particularly in recent years, attempts at solving the environmental problem and zero emissions from factories has been extensive. As a consequence, when materials subjected to surface modification by the conventional method were treated with hot water, pollution with the modifier eluted intot reatment hot water has come to be regarded as problematic.

An object of this invention is to provide a composite resin which upon addition to a major material in a film-forming material or in a molding material, creates highly adhesive affects or an improvement of adhesion effects between such a material and a base material such as polyolefin material without using the chloride or unsaturated carboxylic acid-modified polyolefin required in the prior art.

Another object of this invention is to provide a composite resin which upon addition to a major material in a film-forming material or in a molding material, modifies the surface or interfaceof thematerial, and while exhibiting the modification effect, adheres strongly to the surface of e.g. a base material with the modification effect being hardly lost, for example, with the modification effect being not lost even by treatment with hot water.

### SUMMARY OF THE INVENTION

The present inventors found that a composite resin produced by chemically binding a hydrocarbon moiety consisting a C₂₅₋₂₀₀ hydrocarbon group to a polyester or polyurethane moiety can be used as an interface modifier thereby solving the problem described above, thus arriving at this invention.

The modifier of this invention is characterized by having characteristics related essentially to interface modification, such as high affinity for excellent polyolefins as well as lubricating properties, mar resistance, water repellency and chemical resistance on the surface, which are attributable to its C₂₅₋₂₀₀ hydrocarbon group; and characteristics such as strong adhesion to a film-forming material such as ink or paint, which are attributable to its polyester or polyurethane moiety.

This invention relates in particular to a polyester or polyurethane composite resin obtained by chemically binding a polyester or polyurethane material serving as a polyester or polyurethane moiety to a hydroxyl group as a starting point in a monool (a) containing a C₂₅₋₂₀₀ hydrocarbon group, as well as an interface modifier comprising the resin.

That is, this invention relates to a composite resin prepared by reacting a monool (a) containing a C₂₅₋₂₀₀ hydrocarbon group; a multifunctional compound (G) containing a functional group capable of reacting with a hydroxyl group of the monool ( a) ; and a compound (H) having a functional group capable of reacting with the above functional group.

Further, this invention relates to a polyester composite resin prepared by reacting a monool (a) containing a C₂₅₋₂₀₀ hydrocarbon group; a polybasic acid (b); and a multivalent alcohol (c).

Further, this invention relates to a polyester composite resin prepared by reacting a monool (a) containing a C₂₅₋₂₀₀ hydrocarbon group; a carboxylic acid anhydride (d); and an epoxy group-containing compound (e).

Further, this invention relates to a polyurethane composite resin prepared by reacting a monool (a) containing a C₂₅₋₂₀₀ hydrocarbon group; a multifunctional isocyanate compound (f); and a multivalent alcohol (g).

Further, this invention relates to an interface modifier comprising the composite resin described above.

Further, this invention relates to a film-forming material comprising a major material and the interface modifier described above.

Further, this invention relates to a laminate comprising the above-described film-forming material applied on a polyolefin base material.

Further, this invention relates to a molding material comprising a major material and the above-described interface modifier incorporated therein.

### DETAILED DESCRIPTION OF THE INVENTION

The resin of this invention is a composite of a hydrocarbon moiety and a polyester or polyurethane moiety wherein the hydrocarbon moiety is derived frommonool (a) containing a C₂₅₋₂₀₀ hydrocarbon group.

Hereinafter, this invention is described by reference to some preferable modes of the invention.

A first composite resin as a preferable mode of the invention is a composite resin obtained by reacting a monool (a) containing a C₂₅₋₂₀₀ hydrocarbon group; a multifunctional compound (G) containing a functional group capable of reacting with a hydroxyl group of the monool (a); and a compound (H) having a functional group capable of reacting with a functional group in the multifunctional compound (G).

In this invention, the monool (a) containing a C₂₅₋₂₀₀ hydrocarbon group is the one having one hydroxyl group in one molecule and simultaneously having a C₂₅₋₂₀₀ linear or branched, saturated or unsaturated hydrocarbon group such as a polyolefin including polyethylene and polypropylene or polybutadiene.

Specifically, the monool (a) includes, but is not limited to, polyethylene monool, polypropylene monool, polybutadiene monool etc . whichmay be primary , secondary and tertiary alcohols. However, in consideration of the efficiency of conversion of monool (a) into polyester or polyurethane or the interface-modifying effect thereof, the monool (a) is most preferably a primary alcohol.

The number of carbon atoms in the hydrocarbon group contained in the monool (a) is preferably 25 to 200 , preferably 35 to 150. When the number of carbon atoms is less than 25, the properties of the monool (a) as the hydrocarbon moiety are not exhibited. A number of carbon atoms higher than 200 is not preferable either because the properties of the hydrocarbon moiety are too strong to exhibit its effect as a composite material.

The functional group capable of reacting with a hydroxyl group of the monool (a) is a functional group capable of reacting with a hydroxyl group, and includes a carboxyl group, an anhydride thereof and an isocyanate group.

The multifunctional compound (G) having such a functional group includes a polybasic acid (b) , a carboxylic acid anhydride (d) and a multifunctional isocyanate compound (f).

The functional group capable of reacting with the functional group in the multifunctional compound (G) is a functional group capable of reacting with a hydroxyl group, an anhydride thereof and an isocyanate group, and includes a hydroxyl group, an epoxy group and an amino group.

Compound (H) having such a functional group includes a multivalent alcohol (c); an epoxy group-containing compound (e); and a multivalent alcohol (g).

It goes without saying that as the multifunctional compound (G) and the compound (H), those described in first to fourth modes described later can be used.

A second composite resin as a preferable mode of the inventionisapolyestercompositeresin (A) obtained by reacting a monool (a) containing a C₂₅₋₂₀₀ hydrocarbon group; a polybasic acid (b); and a multivalent alcohol (c).

The monool (a) includes those described in the first mode.

The polybasic acid (b) in this invention is a substance forming an ester linkage with a hydroxyl group of monool (a). The polybasic acid (b) includes, for example, saturated and unsaturated dicarboxylic acids such as phthalic acid, methylphthalic acid,succinic acid, adipic acid, sebacic acid, maleic acid, fumaric acid, itaconic acid, citraconic acid and methylcyclohexane dicarboxylic acid or acid anhydrides thereof, and multivalent carboxylic acids such as trimellitic acid, pyromellitic acid, benzophenone tetracarboxylic acid, citric acid, ethylene glycol bis-trimellitate and glycerol tris-trimellitate or acid anhydrides thereof. Further, the polybasic acid (b) also includes polybasic acids such as cyclopentadiene-maleic acid adducts, terpene-maleic acid adducts and rosin maleic acid adducts, which are obtained by subjecting unsaturated compounds having a conjugated double bond to Diels-Alder reaction with unsaturated dicarboxylic acids.

Among these compounds, the dicarboxylic acids and anhydrides thereof are more preferably used to improve the characteristics of the resultant composite resin.

The multivalent alcohol (c) in this invention includes diols such as ethylene glycol, diethylene glycol, triethylene glycol, propylene glycol, trimethylene glycol and butylene glycol, triols such as glycerin and trimethylol propane, and multivalent alcohols such as diglycerin, triglycerin, pentaerythritol, dipentaerythritol, mannitol and sorbitol. Further, the multivalent alcohol (c) also includes polymeric polyols such as polycaprolactone, polyethylene glycol, polypropylene glycol and polyester polyols.

The alcohol (c) may also be used in combination with a monofunctional alcohol (c-2). The monofunctional alcohol (c-2) which can be used in combination with the alcohol (c) is not particularly limited insofar as it is the one containing one hydroxyl group in one molecule. The monofunctional alcohol includes, for example, aliphatic monools such as methanol, ethanol, propanol, butanol, lauryl alcohol and stearyl alcohol, aromatic monools such as phenol, naphthol and benzyl alcohol, and alkylene glycol ether monools such as propylene glycol monomethyl ether.

In addition, a compound having a functional group other than hydroxyl group can be used in the alcohol (c) to modify the polyurethane moiety. For example, unsaturated alcohols such as hydroxyethyl (meth)acrylate, hydroxybutyl (meth)acrylate, glycerin mono(meth)acrylate, glycerin di(meth)acrylate, glycerin divinyl ether, pentaerythritol tri(meth)acrylate, pentaerythritol trivinyl ether, trimethylol propane di(meth)acrylate, trimethylol propane divinyl ether and divinyl phenol can also be used for the purpose of introducing double bonds.

The compounding ratio of the polybasic acid (b), the multivalent alcohol (c) and the monool (a) in synthesis of the polyester composite resin (A) is selected such that almost 1 mole, preferably 0.8 to 1.2 moles of the multivalent alcohol (c) and 0.01 to 2 moles of the monool (a) are used per mole of the polybasic acid (b). If the amount of the monool (a) is higher than 2 moles per mole of the polybasic acid (b), the molecular weight of the ester moiety in the resultant polyester composite resin (A) is decreased, while if the amount of the monool (a) is less than 0.01 mole, the average molecular weight of the ester moiety in the resultant polyester composite resin (A) becomes too high, and in either case, the characteristics thereof as the composite resin cannot be achieved.

A third composite resin as a preferable mode of this inventionisapolyestercompositeresin (B) obtained by reacting a monool (a) containing a C₂₅₋₂₀₀ hydrocarbon group; a carboxylic acid anhydride (d);and an epoxy group-containing compound (e).

The monool (a) includes those described in the first mode.

The carboxylic acid anhydride (d) in this invention is the one having one or more carboxylic acid anhydride groups in one molecule. Examples thereof include phthalic anhydride, 2-methylphthalic anhydride, 3-methylphthalic anhydride, trimellitic anhydride, cyclohexane dicarboxylic anhydride, methylcyclohexane dicarboxylic anhydride, methylhimic [phonetic transcription] anhydride, methylcyclohexene dicarboxylic anhydride, pyromellitic anhydride, ethylene glycol bis-trimellitate, glycerol tris-trimellitate, succinic anhydride,maleic anhydride,glutaric anhydride,butylsuccinic anhydride, hexylsuccinic anhydride, octylsuccinic anhydride, dodecylsuccinic anhydride, butylmaleic anhydride, pentylmaleic anhydride, hexylmaleic anhydride, octylmaleic anhydride, decylmaleic anhydride, dodecylmaleic anhydride, butylglutamic anhydride, hexylglutamic anhydride, heptylglutamic anhydride, octylglutamic anhydride, decylglutamic anhydride and dodecyl glutamic anhydride.

For characteristics of the resultant polyester composite resin (B), the carboxylic acid anhydride (d) is preferably a compound containing one carboxylic acid anhydride group in one molecule.

The epoxy group-containing compound (e) in this invention is the one having one or more epoxy groups in one molecule. The compound containing one epoxy group in one molecule includes, for example, aromatic or aliphatic ring-containing, epoxy group-containing compounds such as glycidyl (meth)acrylate, vinyl glycidyl ether, styrene oxide, phenyl glycidyl ether, sec-butyl phenyl glycidyl ether and cresyl glycidyl ether, as well as methyl glycidyl ether, ethyl glycidyl ether, propyl glycidyl ether, butyl glycidyl ether, pentyl glycidyl ether, hexyl glycidyl ether, heptyl glycidyl ether, octyl glycidyl ether, nonyl glycidyl ether, decyl glycidyl ether and dodecyl glycidyl ether.

The compound having two or more epoxy groups includes bisphenol A diglycidyl ether, 3,4-epoxycyclohexyl. methyl - 3, 4 - epoxycyclohexane carboxylate ("CYRACURE UVR - 6110" etc. produced by Union Carbide) [In this specification, trade names are phonetically transcribed], 3,4-epoxycy clohexyl ethyl-3,4-epoxy cyclohexane carboxylate, vinyl cyclohexene dioxide ('ELR-4206" etc. produced by Union Carbide), limonene dioxide ("Seroxide 3000" etc. produced by Daicel Chemical Industries, Ltd.), allyl cycylohexene dioxide, 3,4-epoxy-4-methyl cyclohexyl-2-propylene oxide, 2-(3,4-epoxy cyclohexyl-5,5-spiro-3,4-epoxy)cyclohexane-m-dioxane, bis(3,4-epoxycyclohexyl) adipate ("CYRACURE UVR-6128" etc. produced by Union Carbide), bis(3,4-epoxycyclohexylmethyl) adipate, bis(3,4-epoxycyclohexyl) ether, bis(3,4-epoxycyclohexylmethyl) ether, bis(3,4-epoxycyclohexyl) diethyl siloxane etc.

For characteristics of the resultant polyester composite resin (B), the epoxy group-containing compound (e) is preferably a compound containing one epoxy group in one molecule.

The compounding ratio of the acid anhydride (d) , the epoxy group-containing compound (e) and the monool (a) in synthesis of the polyester composite resin (B) is selected such that almost 1 mole, preferably 0.8 to 1.2 moles of the epoxy group-containing compound (e) and 0.01 to 2 moles of the monool (a) are used per mole of the acid anhydride (d). If the amount of the monool (a) is higher than 2 moles per mole of the acid anhydride (d), the molecular weight of the ester moiety in the resultant polyester composite resin (B) is decreased, while if the amount of the monool (a) is less than 0.01 mole, the average molecular weight of the ester moiety in the resultant polyester composite resin (B) becomes too high, and in either case, the characteristics thereof as the composite resin cannot be achieved.

A fourth composite resin as a preferable mode of the invention is a polyurethane composite resin (C) obtained by reacting a monool (a) containing a C₂₅₋₂₀₀ hydrocarbon group; a multifunctional isocyanate compound (f); and a multivalent alcohol (g).

The monool (a) includes those described in the first mode.

The multifunctional isocyanate compound (f) in this invention is a compound having two or more isocyanate groups in one molecule. The isocyanate compound ( f ) is a substance which reacts with hydroxyl groups of the monool (a) and alcohol (g), to form an urethane linkage. Examples thereof include, for example, aromatic diisocyanates such as toluene diisocyanate, diphenyl methane diisocyanate, naphthalene diisocyanate, phenylene diisocyanate, diphenyl ether diisocyanate, xylene diisocyanate, tolidine diisocyanate, dianisidine diisocyanate and isopropylidene bis(phenyl isocyanate), linear aliphatic diisocyanates such as tetramethylene diisocyanate, hexamethylene diisocyanate and lysine diisocyanate, alicyclic diisocyanates such as isophorone diisocyanate, norbornene diisocyanate, dicyclohexyl methane diisocyanate, dicyclohexyl ether diisocyanate and isopropylidene bis(cyclohexyl isocyanate), or tri- ormore functional isocyanate compounds such as triphenyl methane triisocyanate and bis(diisocyanate tolyl) phenyl methane, and polymers of the above isocyanates, such as polyphenyl methane isocyanate.

Among these compounds, the diisocyanate compound is used more preferably to facilitate regulation of the molecular weight of the polyurethane moiety.

The multivalent alcohol (g) in this invention is a substance constituting the polyurethane moiety with the isocyanate compound (f). The alcohol (g) is an element different from the monool (a).

That is, the monool (a) is a moiety constituting the hydrocarbon moiety in the polyurethane composite resin (C), while the alcohol (g) is used to constitute the polyurethane moiety with the isocyanate compound (f). Accordingly, a multifunctional alcohol (g-1) can also be used to regulate the molecular weight of the polyurethane moiety and the density of urethane linkages.

The multivalent alcohol (g) can be used in combination with a monofunctional alcohol (g-2) to hinder or modify the isocyanate terminus by the monofunctional alcohol (g-2).

The multifunctional alcohol (g-1) which can be used as the alcohol (g) includes diols such as ethylene glycol, diethylene glycol, triethylene glycol, propylene glycol, trimethylene glycol and butylene glycol, triols such as glycerin and trimethylol propane, multivalent alcohols such as diglycerin, triglycerin, pentaerythritol, dipentaerythritol, mannitol and sorbitol, as well as polycaprolactone, polyethylene glycol, polypropylene glycol, and polymeric polyols such as polyester polyols. Among these compounds, the diols are used particularly preferably to facilitate regulation of the molecular weight of the polyurethane moiety.

The monofunctional alcohol (g-2) which can be used in combination with the alcohol (g) is not particularly limited insofar as it is the one having one hydroxyl group in one molecule. Examples thereof include aliphatic monools such as methanol, ethanol, propanol, butanol, lauryl alcohol and stearyl alcohol, aromatic monools such as phenol, naphthol and benzyl alcohol, and alkylene glycol ether monools such as propylene glycol monomethyl ether.

In addition, a compound having a functional group other than hydroxyl group can be used in the alcohol (g) to modify the polyurethane moiety. For example, unsaturated alcohols such as hydroxyethyl (meth)acrylate, hydroxybutyl (meth)acrylate, glycerin mono(meth)acrylate, glycerin di(meth)acrylate, glycerin divinyl ether, pentaerythritol tri(meth)acrylate, pentaerythritol trivinyl ether, trimethylol propane di(meth)acrylate, trimethylol propane divinyl ether and divinyl phenol can also be used for the purpose of introducing double bonds.

The compounding ratio of the monool (a), the multifunctional isocyanate compound ( f ) and the multivalent alcohol (g) in synthesis of the polyurethane composite resin (C) is important for regulating the ratio of the hydrocarbon moiety to the polyurethane moiety in the polyurethane composite resin. Further, the ratio of the multifunctional alcohol (g-1) and the monofunctional alcohol (g-2) as the other alcohol (g) is also important for regulation of the molecular weight of the polyurethane moiety, and should be regulated suitably depending on the molecular weight of the desired polyurethane moiety. However, residual isocyanate groups are preferably absent in consideration of the stability with time of the polyurethane urethane composite resin (C) after the reaction is finished. It is therefore preferable that the monool (a) and alcohol (g) are added in such an amount that total hydroxyl groups therein are at least equivalent to isocyanate groups in the isocyanate compound (f).

The composite resin of this invention has been described by reference to the first to fourth modes, and when the ratio of the number of carbon atoms in the polyester moiety to the number of carbon atoms in the hydrocarbon moiety in the polyester composite resins (A) and (B) is 0.1 to 10, particularly 0.2 to 5, the characteristics of the polyurethane composite resins are significantly exhibited.

When the ratio of the average number of carbon atoms in the polyester moiety to the average number of carbon atoms in the hydrocarbon moiety in the polyester composite resin (C) is 0.1 to 10, particularly 0.2 to 5, the characteristics of the polyurethane composite resin are significantly exhibited.

Now, the method of synthesizing the composite resin is described.

Synthesis of the polyester composite resin (A) is carried out by a known general ester synthesis method, and is not particularly limited. When the reaction is accompanied by dehydration reaction, the reaction efficiently proceeds for example by removing water with an azeotropic solvent.

To facilitate regulation of the molecular weight of the polyurethane moiety, the reaction is carried out preferably at a temperature at which the monool (a) is melted or dissolved in a solvent.

Synthesis of the polyester composite resin (B) is carried out by a method descried in e.g. JP-A 61-126128. That is, the acid anhydride (a), the epoxy group-containing compound (b) and the hydroxyl group-containing compound (c) are introduced in predetermined amounts into a reaction vessel and subjected to synthesis in a heater by which the temperature can be regulated in uniform temperature distribution. The synthesis reaction is carried out preferably in a molten state in the absence of a solvent or in a dissolved state in the presence of a solvent, in order to facilitate regulation of the molecular weight of the polyester moiety.

The reaction temperature of the polyester composite resins (A) and (B) is 80 to 200 °C, preferably 90 to 160 °C.

For synthesis of the polyester composite resins (A) and (B), known conventional catalysts used in general esterification, for example, basic catalysts including salts such as sodium hydroxide, potassium hydroxide, lithium chloride, diethyl zinc and tetra(n-butoxy) titanium, and amines such as triethylamine, N,N-dimethyl benzylamine and triphenyl amine, or acid catalysts such as p-toluenesulfonic acid can be used as necessary.

When the polyester composite resins (A) and (B) are synthesized, general radical inhibitors such as hydroquinone and triethylamine can also be used for the purpose of protection against unexpected gelation during the reaction.

Synthesis of the polyurethane composite resin (C) is carried out by a known general method of synthesizing polyurethane, and is not particularly limited. To facilitate regulation of the molecular weight of the polyurethane moiety, the reaction is carried out preferably at a temperature at which the monool (a) is melted or dissolved in a solvent.

The reaction temperature in synthesis of the polyurethane composite resin (C) is 60 to 200°C, preferably 80 to 160°C.

In synthesis of the polyurethane composite resin (C), conventional known catalysts used in general conversion into urethane, for example metallic compounds such as dibutyltin laurate, tin dioctylate and lead dioctylate or amines such as triethylamine, N, N- dimethylbenzylamine and triphenylamine can be used if necessary.

Further, when the polyurethane composite resin (C) is synthesized, general radical inhibitors such as hydroquinone and triethylamine can also be used for the purpose of protection against unexpected gelation during the reaction.

For reducing the remaining isocyanate or regulating the molecular weight of the polyurethane moiety, known amines and carboxylic acids can also be added if necessary.

As the amines, any primary, secondary and tertiary amines may be used, and monoamines, diamines, triamines and higher polyamines may be used without particular limitation.

As the carboxylates, monocarboxylic acids, dicarboxylic acids, tricarboxylic acids and higher polycarboxylic acids may be used without particular limitation.

The composite resin of this invention has been described hereinbefore , and the composite resin of this invention exhibits characteristics related essentially to interfacemodification, such as high affinity for excellent polyolefins as well as lubricating properties, mar resistance, water repellency and chemical resistance on the surface, which are probably attributable to its C₂₅₋₂₀₀ hydrocarbon moiety, and characteristics such as strong adhesion to a film-forming material such as ink or paint, which are attributable to its polyester or polyurethane moiety. Accordingly, the composite resin of this invention can be used preferably as an interface modifier or a film-forming material to exhibit such characteristics.

The interface modif ier in this invention is used by adding it to a major material in a film-forming material such as ink and paint or in a molding material, to achieve two objects, one of which is to modify the interface between the coating-forming material or the tackifier and a base material and the other of which is to allow the modifier to appear on the surface of the film thereby modifying the performance of the surface to exhibit characteristics different from those of the major material.

For example, the former object is to demonstrate excellent adhesion to a polyolefin base material etc. The latter object is to improve the excellent lubricating properties, mar resistance, water repellency, water resistance and chemical resistance of the film-forming material or molding material.

The term "interface" in this application is used in a broad meaning, and the interface of e.g. the film-forming material refers to both the interfaces thereof with the air or a base material, and the interface of the molding material refers to both the interfaces thereof with the air and a mold.

The polyester composite resins (A) and (B) and the polyurethane composite resin (C) in this invention are obtained in the form of a solid or viscous material at ordinary temperatures. When these are to be incorporated as the interface modifier, they may be dissolved in a major material, or may be pulverized and added to a major material if they cannot be dissolved.

The amount of the interface modifier added is 0. 1 to 30 % by weight, preferably 0.5 to 15 % by weight, in a medium to which it is added. When the amount of the interface modifier added is too low, the surface-modifying effect thereof is low, while when the amount thereof is too high, the strength of the major material is deteriorated.

In particular, when the interface modifier is pulverized and added to a film-forming material, the average particle diameter of the interface modifier is made greater than the thickness of a dry film made of the film-forming material thereby achieving a higher effect.

The film-forming material in this invention refers to a material for forming a film by printing or coating on a base material. For example, the film-forming material is ink, paint etc.

The film-forming material in this invention can be used in any applications without particular limitation. For example, the film-forming material can be used in a gravure ink, flexographic ink, silkscreen ink, offset ink, overprinting varnish, paint, primer, anchor coat, sealing varnish, finishing varnish etc.

For the purpose of modifying the interface with a base material particularly in some of these applications, the effect of the interface modifier is exhibited significantly when it is used in a coating material constituting the lowermost surface of the coating layer, that is, in a f ilm ink, a primer, an anchor coat etc. For the purpose of modification of the interface with the air, the surface modifier is preferably used in a coating material constituting the outermost surface, that is, in an external ink, an overprinting varnish, a finishing varnish etc. in order to exhibit the effect significantly.

Further, the interface modifier is used preferably as a material whose abrasion resistance is required after coating and curing, for example, as a coating for food containers such as a can for drinks, a can for foods, a paper pack for drinks and foods, etc., as a coating for pre-coated steels, and as a coating for coated paper. In particular, the interface modifier can be used preferably as a coating for cans such as a can for drinks, a can for foods and a can for cosmetics where high abrasion resistance is required, particularly as a coating for a can for drinks. When used as a coating for cans, the interface modifier can exhibit the maximum effect because it is endurable to hot water treatment such as retort treatment and past treatment of cans for sterilization and washing after the cans are charged with contents.

The method of forming a coating or a film from these film-forming materials is not particularly limited. For example, mention is made of printing machines such as an offset printing machine, a gravure printing machine, a screen printing machine and a flexographic printing machine, coaters such as a roll coater, a curtain coater, a dip coater and a knife coater, as well as spray coating, brush coating etc.

These film-forming materials can be subjected to heating drying or after-baking in order to form a coating or a film. The heating temperature is varied considerably depending on the type or object of the film-forming material, the type of the base material and the method of forming the film. Heating is carried out preferably at 50 to 300°C, more preferably 100°C to 250°C, to exhibit the maximum effect of the invention. The maximum effect can be achieved probably due to melting of the composite materials (A) to (C) and to improvements in affinity of the ester and urethane moieties for the major material in the film-forming material.

The major material in these film-coating materials can be used without particular limitation. Their type is varied widely. The major resin constituting the major material in the film-coating material includes polyester resin, polyurethane resin, epoxy resin, acryl resin, phenol resin, cellulose type resin such as nitrocellulose, ketone resin, polyamide resin, amino resin, vinyl chloride resin, vinyl acetate resin, polyvinyl alcohol resin, polystyrene resin, polyvinyl ether resin, polyvinyl butyral resin, polyether resin, alkyd resin, polybutadiene resin, xylene resin, guanamine resin, diallyl phthalate resin, furan resin, polyimide resin, maleic acid resin, melamine resin, urea resin etc. Depending on their constitution, these are classified roughly into thermoplastic resin and thermosetting resin, both of which can be used.

In consideration of formation of the film, the major material in the film-forming material is often diluted with a solvent. The solvent contained in the major material in the film-forming material includes, for example, hydrocarbon type solvents such as hexane, cyclohexane, octane, toluene, xylene andmethylcyclohexane, ester type solvents such as ethyl acetate, propyl acetate, butyl acetate and methyl propylene glycol monoacetate, ketone type solvents such as acetone, methyl ethyl ketone, methyl butyl ketone, cyclohexanone and methyl cyclohexanone, ether type solvents such as diethyl ether, methyl butyl ether, methyl propylene glycol, propylene glycol monoether, diethylene glycol monobutyl ether, methyl Cellosolve, ethyl Cellosolve, butyl Cellosolve, tetrahydrofuran and dioxane, fatty alcohol type solvents such as methanol, ethanol, propanol, butanol and cyclohexanol, aromatic alcohol type solvents such as phenol and cresol , halogen type solvents such as methylene chloride, chloroform, carbon tetrachloride, dichloroethane, dichloroethylene, trichloroethylene, tetrachloroethylene, chlorobenzene and dichlorobenzene, petroleum type solvents such as industrial gasoline, solvent naphtha, petroleum ether, petroleum naphtha, petroleum benzene and mineral sprit, plant type solvents such as turpentine oil and tung oil, and water.

Further, radiation-setting reactive solvent dilution type resin such as UV- and electron beam-setting type resin can also be used. For dilution in this case, reactive solvents by acrylates, epoxy monomers etc. are mainly used.

As the tackifier or the adhesive in this invention, a pressure-sensitive adhesive tape, a laminate adhesive, fillers etc. can be used without particular limitation and can be used for every purpose.

The tackifier material in this invention refers to other materials constituting the tackifier and adhesive. For example, it refers to resins such as acryl resin, polyester resin, urethane resin, synthetic rubber, natural rubber, rosin, tackifier etc. or to modified products of these resins.

The molding material in this invention refers to amaterial sub j ected to molding bymethods such as , for example, compression transfer molding, hand lay-up molding, spray-up molding, vacuum/pressure bag molding, autoclave molding, cold press molding, injection molding, extrusion molding, blow molding, calender molding, foam molding, solid molding, powder molding etc.

The major material in the molding material can be utilized without particular limitation. The type of the major material is varied widely. The major resin constituting the major material in the molding material includes polyester resin, polyurethane resin, epoxy resin, acryl resin, phenol resin, cellulose type resin such as acetate cellulose and nitrocellulose, ketone resin, polyamide resin, vinyl chloride resin, vinyl acetate resin, polyvinyl alcohol resin, polystyrene resin, polyvinyl ether resin, polyvinyl butyral resin,polyether resin,alkyd resin,polybutadiene resin,amino resin, xylene resin, guanamine resin, diallylphthalate resin, furan resin, polyimide resin, maleic acid resin, melamine resin, urea resin etc. Depending on their constitution, they can be classified roughly into thermoplastic resin and thermosetting res in , both of which can be used. In particular, a molded article made of thermoplastic resin brings about excellent effects.

The laminate in this invention refers to a laminate having a layer containing the composite resin laminated on polyolefin by techniques such as printing, coating, melt coating and lamination. In the laminate, one or more layers may be laminated without particular limitation.

The polyolefin constituting the laminate in this invention includes low-density polyethylene, high-density polyethylene, polypropylene etc. Its shape is not limited to a f ilm shape , sheet shape , or any other shapes of molded articles. Further, reinforcing treatment such as stretching or adhesion-facilitating treatment such as corona discharge treatment, flame treatment, plasma treatment and washing treatment may or not may be carried out . However , the effect of this invention is demonstrated maximally when the polyolefin not subjected to adhesion-facilitating treatment is used.

### EXAMPLES

Hereinafter, this invention is described in more detail by reference to the Examples, which are not intended to limit the scope of this invention.

### Example 1. Synthesis of polyester composite resin (A)

The monool (a), polybasic acid (b) andmultivalent alcohol (c) were introduced in the amounts shown in Table 1 into a 1-L three-necked flask equipped with an azeotropic distillation tube, and 100 ml toluene and 1 g hydroquinone were further added thereto, and the mixture was heated at 155 °C on an oil bath. Six hours later, the reaction solution was cooled, and the solvent was removed under reduced pressure, whereby polyester composite resin (A) was obtained.

The resultant composite resin was added to 2-propanol such that its solids content was adjusted to 25 % by weight, and then the resin was dispersed or dissolved by a high-speed mixer.

In the Table, the expression "C25" for "Alcohol (a)" refers to a polyethylene monool containing 25 carbon atoms on average. Each number in the round brackets after the weight refers to the number of moles of the material added. Further, the carbon number ratio refers to (number of carbon atoms in the ester moiety in one molecule)/(number of carbon atoms in the alkyl moiety).

**Table 1**

| Number | alcohol (a) | Polybasic acid (b) | Alcohol (c) | Carbon number ratio |
|---|---|---|---|---|
| Example 1.1 | C25 184g(0.5) | PAH 222g(1.5) | EG 96g(1.5) | 1.2 |
| Example 1.2 | C25 92g(0.25) | PAH 370g(2.5) | EG 160g(2.5) | 4.0 |
| Example 1.3 | C25 46g(0.13) | PAH 370g(2.5) | EG 160g(2.5) | 8.0 |
| Example 1.4 | C25 31g(0.08) | PAH 370g(2.5) | EG 160g(2.5) | 12.0 |
| Example 1.5 | C50 359g(0.5) | PAH 148g(1.0) | EG 64g(1.0) | 0.4 |
| Example 1.6 | C50 359g(0.5) . | PAH 222g(1.5) | EG 96g(1.5) | 0.6 |
| Example 1.7 | C50 180g(0.25) | PAH 370g(2.5) | EG 160g(2.5) | 2.0 |
| Example 1.8 | C25 184g(0.5) | MAH 147g(1.5) | EG 96g(1.5) | 1.2 |
| Example 1.9 | C25 184g(0.5) | ADA 219g(1.5) | EG 96g(1.5) | 1.0 |
| Example 1.10 | C25 184g(0.5) | PAH 222g(1.5) | PG 117g(1.5) | 0.7 |
| Example 1.11 | C25 184g(0.5) | PAH 222g(1.5) | DEG 159g(1.5) | 1.4 |
| Example 1.12 | C50 359g(0.5) | MAH 147g(1.5) | EG 96g(1.5) | 1.2 |
| Example 1.13 | C50 359g(0.5) | ADA 219g(1.5) | EG 96g(1.5) | 1.0 |
| Example 1.14 | C50 359g(0.5) | PAH 222g(1.5) | PG 117g(1.5) | 0.7 |
| Example 1.15 | C50 359g(0.5) | PAH 222g(1.5) | DEG 159g(1.5) | 1.4 |
| Comparative Example 1.1 | C12 93g(0.5) | PAH 222g(1.5) | EG 96g(1.5) | 2.5 |
| PAH: phthalic anhydride; MAH: maleic anhydride; ADA: adipic acid; EG: ethylene glycol; PG: propylene glycol; DEG: diethylene glycol. | | | | |

### Example 2. Synthesis of polyester composite resin (B)

The monool (a), carboxylic acid anhydride (d) and epoxy group-containing compound (e) were introduced in the amounts shown in Table 2 into a 1-L three-neckedflask, and 200 ml toluene, 1 g hydroquinone and 0 . 5 g N, N-dimethyl benzylamine were further added thereto, and the mixture was heated at 120 °C on an oil bath. Six hours later, the reaction solution was cooled, and the solvent was removed under reduced pressure, whereby polyester composite resin (B) was obtained.

The resultant composite resin was added to 2-propanol such that its solids content was adjusted to 25 % by weight, and then the resin was dispersed or dissolved by a high-speed mixer.

In the Table, the expression "C25" for "Alcohol (a) " refers to a polyethylene monool containing 25 carbon atoms on average. Each number in the round brackets after the weight refers to the number of moles of the material added. Further, the carbon number ratio refers to (number of carbon atoms in the ester moiety in one molecule of the composite resin) / (number of carbon atoms in the alkyl moiety in one molecule of the composite resin).

**Table 2**

| Number | Alcohol (a) | Acid anhydride (d) | Epoxy (e) | Carbon number ratio |
|---|---|---|---|---|
| Example 2.1 | C25 184g(0.5) | PAH 222g(1.5) | GMA 213g(1.5) | 1.8 |
| Example 2.2 | C25 92g(0.25) | PAH 185g(1.25) | GMA 178g(1.25) | 3.0 |
| Example 2.3 | C25 46g(0.13) | PAH 185g(1.25) | GMA 178g(1.25) | 6.0 |
| Example 2.4 | C25 23g(0.06) | PAH 185g(1.25) | GMA 178g(1.25) | 12.0 |
| Example 2.5 | C50 359g(0.5) | PAH 222g(1.5) | GMA 213g(1.5) | 0.9 |
| Example 2.6 | C50179g(0.25) | PAH 185g(1.25) | GMA 178g(1.25) | 1.5 |
| Example 2.7 | C50 90g(0.13) | PAH 185g(1.25) | GMA 178g(1.25) | 3.0 |
| Example 2.8 | C75 153g(0.33) | PAH 148g(1.0) | GMA 142g(1.0) | 0.6 |
| Example 2.9 | C75 214g(0.20) | PAH 148g(1.0) | GMA 142g(1.0) | 1.0 |
| Example 2.10 | C120 340g(0.20) | PAH 89g(0.6) | GMA 85g(0.6) | 0.38 |
| Example 2.11 | C120 104g(0.12) | PAH 178g(1.2) | GMA 170g(1.2) | 1.31 |
| Example 2.12 | C25 184g(0.5) | MAH 147g(1.5) | GMA 213g(1.5) | 0.9 |
| Example 2.13 | C25 184g(0.5) | HPAH 231g(1.5) | GMA 213g(1.5) | 1.8 |
| Example 2.14 | C25 184g(0.5) | PAH 222g(1.5) | PGE 213g(1.5) | 0.9 |
| Example 2.15 | C25 184g(0.5) | PAH 222g(1.5) | DGE 324g(1.5) | 2.5 |
| Example 2.16 | C50 359g(0.5) | MAH 147g(1.5) | GMA 213g(1.5) | 0.5 |
| Example 2.17 | C50 359g(0.5) | HPAH 231g(1.5) | GMA 213g(1.5) | 0.9 |
| Example 2.18 | C50 359g(0.5) | PAH 222g(1.5) | PGE 213g(1.5) | 0.5 |
| Example 2.19 | C50 359g(0.5) | PAH 222g(1.5) | DGE 324g(1.5) | 1.3 |
| Comparative Example 2.1 | C12 93g(0.5) | PAH 222g(1.5) | GMA 213g(1.5) | 3.8 |
| PAH: phthalic anhydride; MAH: maleic anhydride; HPAH: hexahydrophthalic anhydride; GMA: glycidyl methacrylate; PGE: phenyl glycidyl ether; DGE: decyl glycidyl ether. | | | | |

### Example 3. Synthesis of polyurethane composite resin (C)

The monool (a) and isocyanate compound ( f ) shown in Table 3 were introduced in the amounts shown in the Table below into a 1-L three-necked flask equipped with a cooling tube, and 200 ml toluene, 1 g hydroquinone and 0.5 g tin dioctylate as the reaction catalyst were further added thereto, and the mixture was heated at 120 °C on an oil bath. After the reaction, it was confirmed by calculation of the ratio of the respective components that the required residual isocyanate value was reached, and then the multifunctional alcohol (g-1) shown in Table 1 was added thereto. After it was confirmed by calculation of the ratio of the respective components that the required isocyanate value was reached, 2-propanol was added in excess (10 equivalents or more) as monofunctional alcohol (g-2). After the absence of residual isocyanate was confirmed from itsIRabsorptionspectrum, thesolventwasremovedunderreduced pressure, whereby polyurethane composite resin (C) was obtained.

The resultant composite resin was added to 2-propanol such that its solids content was adjusted to 25 % by weight, and the resin was dispersed or dissolved by a high-speed mixer.

In the Table, the expression "C25" for "Alcohol (a) " refers to a polyethylene monool containing 25 carbon atoms on average. Each number in the round brackets after the weight refers to the number of moles of the material added. Further, the carbon number ratio refers to (number of carbon atoms in the urethane moiety in one molecule)/(number of carbon atoms in the alkyl moiety).

**Table 3**

| Number | Alcohol (a) | Isocyanate (f) | Alcohol (g-1) | Carbon number ratio |
|---|---|---|---|---|
| Example 3.1 | C25 184g(0.5) | HMDI 168g(1.0) | EG 31g(0.5) | 0.8 |
| Example 3.2 | C25 184g(0.5) | HMDI 252g(1.5) | EG 62g(1.0) | 1.2 |
| Example 3.3 | C25 92g(0.25) | HMDI 210g(1.25) | EG 62g(1.0) | 2.0 |
| Example 3.4 | C25 46g(0.13) | HMDI 210g(1.25) | EG 70g(1.13) | 4.0 |
| Example 3.5 | C25 23g(0.06) | HMDI 210g(1.25) | EG 70g(1.19) | 8.0 |
| Example 3.6 | C25 12g(0.03) | HMDI 210g(1.25) | EG 76g(1.22) | 16.0 |
| Example 3.7 | C50 359g(0.5) | HMDI 252g(1.5) | EG 62g(1.0) | 0.6 |
| Example 3.8 | C50 90g(0.13) | HMDI 210g(1.25) | EG 70g(1.13) | 2.0 |
| Example 3.9 | C50 44g(0.06) | HMDI 210g(1.25) | EG 74g(1.19) | 4.0 |
| Example 3.10 | C75 67g(0.06) | HMDI 210g(1.25) | EG 74g(1.19) | 2.7 |
| Example 3.11 | C120 104g(0.06) | HMDI 210g(1.25) | EG 74g(1.19) | 1.7 |
| Example 3.12 | C25 184g(0.5) | IPDI 333g(1.5) | EG 62g(1.0) | 1.7 |
| Example 3.13 | C25 92g(0.25) | IPDI 278g(1.25) | EG 62g(1.0) | 2.8 |
| Example 3.14 | C25 46g(0.13) | IPDI 278g(1.25) | EG 70g(1.13) | 5.6 |
| Example 3.15 | C25 92g(0.25) | HMDI 210g(1.25) | HDO 118g(1.0) | 2.7 |
| Example 3.16 | C25 92g(0.25) | HMDI 210g(1.25) | DEG 106g(1.0) | 2.4 |
| Example 3.17 | C25 92g(0.25) | HMDI 210g(1.25) | TEG 245g(1.0) | 2.7 |
| Example 3.18 | C25 92g(0.25) | HMDI 210g(1.25) | PEG 620g(1.0) | 4.9 |
| Example 3.19 | C25 92g(0.25) | HMDI 210g(1.25) | DCP 228g(1.0) | 4.0 |
| Example 3.20 | C25 92g(0.25) | HMDI 210g(1.25) | TCP 228g(1.0) | 5.1 |
| Example 3.21 | C50 359g(0.5) | IPDI 333g(1.5) | EG 62g(1.0) | 0.9 |
| Example 3.22 | C50180g(0.25) | IPDI 278g(1.25) | EG 62g(1.0) | 1.4 |
| Example 3.23 | C50 90g(0.13) | IPDI 278g(1.25) | EG 70g(1.13) | 2.8 |
| Example 3.24 | C50 180g(0.25) | HMDI 210g(1.25) | HDO 118g(1.0) | 1.4 |
| Example 3.25 | C50 180g(0.25) | HMDI 210g(1.25) | DEG 106g(1.0) | 1.2 |
| Example 3.26 | C50 180g(0.25) | HMDI 210g(1.25) | TEG 245g(1.0) | 1.4 |
| Example 3.27 | C50 180g(0.25) | HMDI 210g(1.25) | PEG 620g(1.0) | 2.5 |
| Example 3.28 | C50 180g(0.25) | HMDI 210g(1.25) | DCP 228g(1.0) | 2.0 |
| Example 3.29 | C50 180g(0.25) | HMDI 210g(1.25) | TCP 228g(1.0) | 2.6 |
| Comparative Example 3.1 | _{C12} 47g(0.25) | HMDI 210g(1.25) | EG 62g(1.0) | 4.1 |
| HMDI: hexamethylene diisocyanate; IPDI: isophorone diisocyanate; EG: ethylene glycol; HDO: hexane diol; DEG: diethylene glycol; TED: triethylene glycol; PEG: polyethylene glycol (n = 10); DCP: dicaprolactone; TCP: tricaprolactone. | | | | |

### Example 4 . Evaluation of adhesion of polyester composite resin (A)

The composite resin synthesized and dispersed in 2-propanol in Example 1 was mixed in an amount (expressed in terms of solids content) shown in Table 4 with KL424 (solvent type polyurethane) produced by Arakawa Kagaku and sufficiently stirred in a mixer. After stirring was finished, the resin was applied by a bar coater #5 onto a biaxially oriented polypropylene film (untreated) and dried with a drier.

The dried film was examined in a cellophane tape peel test.

Cellophane tape peeling was evaluated under the following 5 ranks.

5: not peeled; 4: partially peeled by strong peeling; 3: totally peeled by strong peeling; 2: partially peeled by weak peeling; and 1: totally peeled by weak peeling.

**Table 4**

| Number | Composite resin (A) | Amount (weight %) | Evaluation of adhesion |
|---|---|---|---|
| Example 4.1 | Example 1.1 | 2 | 5 |
| Example 4.2 | Example 1.2 | 2 | 5 |
| Example 4.3 | Example 1.3 | 2 | 4 |
| Example 4.4 | Example 1.4 | 2 | 3 |
| Example 4.5 | Example 1.5 | 2 | 4 |
| Example 4.6 | Example 1.6 | 2 | 5 |
| Example.4.7 | Example 1.7 | 2 | 5 |
| Example 4.8 | Example 1.8 | 2 | 5 |
| Example 4.9 | Example 1.9 | 2 | 5 |
| Example 4.10 | Example 1.10 | 2 | 5 |
| Example 4.11 | Example 1.11 | 2 | 5 |
| Example 4.12 | Example 1.1 | 0.3 | 3 |
| Example 4.13 | Example 1.1 | 1 | 5 |
| Example 4.14 | Example 1.1 | 20 | 4 |
| Example 4.15 | Example 1.1 | 35 | 3 |
| Comparative example 4.1 | None | 0 | 1 |
| Comparative example 4.2 | Comparative example 1.1 | 2 | 1 |
| Comparative example 4.3 | PPCI | 4 | 4 |
| PPCl: Polypropylene chloride in toluene (Superchlon 803MW produced by Nippon Seishi) | | | |

The amounts shown above are expressed in terms of solids content.

### Example 5 . Evaluation of adhesion of polyester composite resin (B)

The composite resin synthesized and dispersed in 2-propanol in Example 2 was mixed in an amount (expressed in terms of solids content) shown in Table 5 with KL424 (solvent type polyurethane) produced by Arakawa Kagaku and sufficiently stirred in a mixer. After stirring was finished, the resin was applied by a bar coater #5 onto a biaxially oriented polypropylene film (untreated) and dried with a drier.

The dried film was examined in a cellophane tape peel test.

Cellophane tape peeling was evaluated under the following 5 ranks.

5: not peeled; 4: partially peeled by strong peeling; 3: totally peeled by strong peeling; 2: partially peeled by weak peeling; and 1: totally peeled by weak peeling.

**Table 5**

| Number | Composite resin (B) | Amount (weight %) | Evaluation of adhesion |
|---|---|---|---|
| Example 5.1 | Example 2.1 | 2 | 5 |
| Example 5.2 | Example 2.2 | 2 | 5 |
| Example 5.3 | Example 2.3 | 2 | 4 |
| Example 5.4 | Example 2.4 | 2 | 3 |
| Example 5.5 | Example 2.5 | 2 | 5 |
| Example 5.6 | Example 2.6 | 2 | 5 |
| Example 5.7 | Example 2.7 | 2 | 5 |
| Example 5.8 | Example 2.8 | 2 | 5- |
| Example 5.9 | Example 2.9 | 2 | 5 |
| Example 5.10 | Example 2.10 | 2 | 3 |
| Example 5.11 | Example 2.11 | 2 | 4 |
| Example 5.12 | Example 2.12 | 2 | 5 |
| Example 5.13 | Example 2.13 | 2 | 5 |
| Example 5.14 | Example 2.14 | 2 | 5 |
| Example 5.15 | Example 2.15 | 2 | 5 |
| Example 5.16 | Example 2.1 | 0.3 | 3 |
| Example 5.17 | Example 2.1 | 1 | 5 |
| Example 5.18 | Example 2.1 | 20 | 4 |
| Example 5.19 | Example 2.1 | 35 | 3 |
| Comparative example 5.1 | None | 0 | 1 |
| Comparative example 5.2 | Comparative example 2.1 | 2 | 1 |
| Comparative example 5.3 | PPCI | 4 | 4 |
| PPCl : Polypropylene chloride in toluene (Superchlon 803MW produced by Nippon Seishi) | | | |

The amounts shown above are expressed in terms of solids content.

### Example 6. Evaluation of adhesion of polyurethane composite resin (C)

The composite resin (C) synthesized and dispersed in 2-propanol in Example 3 was mixed in an amount (expressed in terms of solids content) shown in Table 6 with KL424 (solvent type polyurethane) produced by Arakawa Kagaku and sufficiently stirred in a mixer. After stirring was finished, the resin was applied by a bar coater #5 onto a biaxially oriented polypropylene film (untreated) and dried with a drier.

The dried film was examined in a cellophane tape peel test.

Cellophane tape peeling was evaluated under the following 5 ranks.

5: not peeled; 4: partially peeled by strong peeling; 3: totally peeled by strong peeling; 2: partially peeled by weak peeling; and 1: totally peeled by weak peeling.

**Table 6**

| Number | Composite resin (C) | Amount (weight %) | Evaluation of adhesion |
|---|---|---|---|
| Example 6.1 | Example 3.1 | 2 | 5 |
| Example 6.2 | Example 3.2 | 2 | 5 |
| Example 6.3 | Example 3.3 | 2 | 5 |
| Example 6.4 | Example 3.4 | 2 | 4 |
| Example 6.5 | Example 3.5 | 2 | 3-4 |
| Example 6.6 | Example 3.6 | 2 | 3 |
| Example 6.7 | Example 3.7 | 2 | 4-5 |
| Example 6.8 | Example 3.8 | 2 | 5 |
| Example 6.9 | Example 3.9 | 2 | 5 |
| Example 6.10 | Example 3.10 | 2 | 4-5 |
| Example 6.11 | Example 3.11 | 2 | 3 |
| Example 6.12 | Example 3.12 | 2 | 5 |
| Example 6.13 | Example 3.13 | 2 | 5 |
| Example 6.14 | Example 3.14 | 2 | 4 |
| Example 6.15 | Example 3.15 | 2 | 5 |
| Example 6.16 | Example 3.16 | 2 | 5 |
| Example 6.17 | Example 3.17 | 2 | 5 |
| Example 6.18 | Example 3.18 | 2 | 4-5 |
| Example 6.19 | Example 3.19 | 2 | 5 |
| Example 6.20 | Example 3.20 | 2 | 4 |
| Example 6.21 | Example 3.2 | 0.3 | 3 |
| Example 6.22 | Example 3.2 | 1 | 5 |
| Example 6.23 | Example 3.2 | 20 | 4 |
| Example 6.24 | Example 3.2 | 35 | 3 |
| Comparative example 6.1 | None | 0 | 1 |
| Comparative example 6.2 | Comparative example 3.1 | 2 | 1 |
| Comparative example 6.3 | PPCI | 4 | 4 |
| PPCl: Polypropylene chloride in toluene (Superchlon 803MW produced by Nippon Seishi) | | | |

The amounts shown above are expressed in terms of solids content.

### Example 7 Evaluation of adhesion of polyester composite resin (B)

The composite resin synthesized and dispersed in 2-propanol in Example 2 was mixed in an amount (expressed in terms of solids content) shown in Table 7 with a tackifier composition consisting of SIS5000 (polypropylene-isoprene block copolymer) produced by JSR and Alcon M ( tackifier type) produced by Arakawa Kagaku, and then stirred sufficiently in a mixer. After stirring was finished, the resin was applied by an applicator to a thickness of 30 µm on a biaxially oriented polypropylene film (untreated) and dried at 150°C for 10 minutes. After drying was finished, a silicone-treated release paper was laminated thereon and cut into pieces of 25 mm in width and 50 mm in length. The release paper was removed, and a section of 25 mm in length and 25 mm in width, out of the resultant sticky surface, was laminated on a SUS304 stainless steel plate previously polished with a sandpaper #280, then contact-bonded to the steel plate by reciprocating a 2-kg roll once thereon, left for 20 minutes, and measured for its peel adhesion at 180° at a peel rate of 300 mm/min. at room temperature (25°C) in an atmosphere with 65 % humidity.

**Table 7**

| Number | Composite resin (B) | Amount (weight %) | Peel adhesion (kg/25 mm width) |
|---|---|---|---|
| Example 7.1 | Example 2.1 | 2 | 2.3 |
| Example 7.2 | Example 2.2 | 2 | 2.2 |
| Example 7.3 | Example 2.3 | 2 | 1.6 |
| Example 7.4 | Example 2.4 | 2 | 0.9 |
| Example 7.5 | Example 2.5 | 2 | 2.1 |
| Example 7.6 | Example 2.6 | 2 | 2.8 |
| Example 7.7 | Example 2.7 | 2 | 2.7 |
| Example 7.8 | Example 2.8 | 2 | 2.0 |
| Example 7.9 | Example 2.9 | 2 | 2.0 |
| Example 7.10 | Example 2.10 | 2 | 1.4 |
| Example 7.11 | Example 2.11 | 2 | 1.9 |
| Example 7.12 | Example 2.12 | 2 | 2.3 |
| Example 7.13 | Example 2.13 | 2 | 2.7 |
| Example 7.14 | Example 2.14 | 2 | 2.3 |
| Example 7.15 | Example 2.15 | 2 | 2.7 |
| Example 7.16 | Example 2.1 | 0.3 | 0.4 |
| Example 7.17 | Example 2.1 | 1 | 2.0 |
| Example 7.18 | Example 2.1 | 20 | 1.8 |
| Example 7.19 | Example 2.1 | 35 | 1.0 |
| Comparative example 7.1 | None | 0 | 0.2 |
| Comparative example 7.2 | Comparative example 2.1 | 2 | 0.3 |

### Example 8

### Evaluation of adhesion of polyurethane composite resin (C)

The composite resin synthesized and dispersed in 2-propanol in Example 3 was mixed in an amount (expressed in terms of solids content) shown in Table 8 with a tackifier composition consisting of SIS5000 (polypropylene-isoprene block copolymer) produced by JSR and Alcon M ( tackifier type) produced by Arakawa Kagaku, and then stirred sufficiently in a mixer. After stirring was finished, the resin was applied by an applicator to a thickness of 30 µm on a biaxially oriented polypropylene film (untreated) and dried at 150°C for 10 minutes. After drying was finished, a silicone-treated release paper was laminated thereon and cut into pieces of 25 mm in width and 50 mm in length. The release paper was removed, and a section of 25 mm in length and 25 mm in width, out of the resultant sticky surface, was laminated on a SUS304 stainless steel plate previously polished with a sand paper #280, then contact-bonded to the steel plate by reciprocating a 2-kg roll once thereon, left for 20 minutes, and measured for its peel adhesion at 180° at a peel rate of 300 mm/min. at room temperature (25°C) in an atmosphere with 65 % humidity.

**Table 8**

| Number | Composite resin (C) | Amount (weight %) | Peel adhesion (kg/25mm) |
|---|---|---|---|
| Example 8.1 | Example 3.1 | 2 | 2.3 |
| Example 8.2 | Example 3.2 | 2 | 2.8 |
| Example 8.3 | Example 3.3 | 2 | 2.2 |
| Example 8.4 | Example 3.4 | 2 | 1.6 |
| Example 8.5 | Example 3.5 | 2 | 1.1 |
| Example 8.6 | Example 3.6 | 2 | 0.8 |
| Example 8.7 | Example 3.7 | 2 | 1.9 |
| Example 8.8 | Example 3.8 | 2 | 2.3 |
| Example 8.9 | Example 3.9 | 2 | 2.2 |
| Example 8.10 | Example 3.10 | 2 | 1.8 |
| Example 8.11 | Example 3.11 | 2 | 1.0 |
| Example 8.12 | Example 3.12 | 2 | 2.3 |
| Example 8.13 | Example 3.13 | 2 | 2.4 |
| Example 8.14 | Example 3.14 | 2 | 2.0 |
| Example 8.15 | Example 3.15 | 2 | 2.7 |
| Example 8.16 | Example 3.16 | 2 | 2.2 |
| Example 8.17 | Example 3.17 | 2 | 2.1 |
| Example 8.18 | Example 3.18 | 2 | 2.0 |
| Example 8.19 | Example 3.19 | 2 | 2.4 |
| Example 8.20 | Example 3.20 | 2 | 1.9 |
| Example 8.21 | Example 3.2 | 0.3 | 1.0 |
| Example 8.22 | Example 3.2 | 1 | 2.2 |
| Example 8.23 | Example 3.2 | 20 | 1.7 |
| Example 8.24 | Example 3.2 | 35 | 1.0 |
| Comparative example 8.1 | None | 0 | 0.2 |
| Comparative example 8.2 | Comparative example 3.1 | 2 | 0.3 |

### Example 9

### Evaluation of the polyester composite resin (A) as an interface modifier (lubricant)

The composite resin synthesized and dispersed in 2-propanol in Example 1 was mixed in the described amount (in terms of solids content of the composite resin) with a coating for metal consisting of 20 % by weight of ACRYLOID AT- 400 (acryl resin produced by ROHM & HAAS), 20 % by weight of GARGILL 5770 (polyester resin produced by GARGILL) , 20 % by weight of Mycoat 106 (amino resin produced by Mitsui Sci-tec) , 20 % by weight of butyl Cellosolve, 15 % by weight of Solbesso 100 (petroleum type solvent produced by Exxon Kagaku) and 5 % by weight of 2-propanol, and the mixture was sufficiently stirred in a mixer. After stirring was finished, the mixture was applied by a bar coater #8 onto an aluminum metal plate treated with chromate, dried and baked at 200°C for 4 minutes in a gas oven, and then subjected to past treatment with hot water at 80°C for 30 minutes. The resultant film was measured for its dynamic coefficient of friction under a 1-kg load by a 3-point support method.

As the polyethylene wax used in Comparative Example 9.3, Polywax 725 (polyethylene produced by Baker Petrolite) subjected to dispersion treatment in the same manner as in Example 1 was used.

**Table 9**

| Number | Composite resin (A) | Amount (weight %) | Coefficient of friction |
|---|---|---|---|
| Example 9.1 | Example 1.1 | 2 | 0.045 |
| Example 9.2 | Example 1.2 | 2 | 0.062 |
| Example 9.3 | Example 1.3 | 2 | 0.083 |
| Example 9.4 | Example 1.4 | 2 | 0.087 |
| Example 9.5 | Example 1.5 | 2 | 0.042 |
| Example 9.6 | Example 1.6 | 2 | 0.035 |
| Example 9.7 | Example 1.7 | 2 | 0.049 |
| Example 9.8 | Example 1.12 | 2 | 0.042 |
| Example 9.9 | Example 1.13 | 2 | 0.048 |
| Example 910 | Example 1.14 | 2 | 0.051 |
| Example 9.11 | Example 1.15 | 2 | 0.039 |
| Example 9.12 | Example 1.6 | 0.3 | 0.052 |
| Example 9.13 | Example 1.6 | 1 | 0.046 |
| Example 9.14 | Example 1.6 | 20 | 0.072 |
| Example 9.15 | Example 1.6 | 35 | 0.082 |
| Comparative example 9.1 | None | 0 | 0.185 |
| Comparative example 9.2 | Comparative example 1.1 | 2 | 0.138 |
| Comparative example 9.3 | PE wax | 2 | 0.099 |
| Comparative example 9.4 | palm wax | 2 | 0.152 |

### Example 10

### Evaluation of the polyester composite resin (B) as a lubricant

The composite resin synthesized and dispersed in 2-propanol in Example 2 was mixed in the described amount (in terms of solids content of the composite resin) with a coating for metal consisting of 20 % by weight of ACRYLOID AT-400 (acryl resin produced by ROHM & HAAS) , 20 % by weight of GARGILL 5770 (polyester resin produced by GARGILL) , 20 % by weight of Mycoat 106 (amino resin produced by Mitsui Sci-tec), 20 % by weight of butyl Cellosolve, 15 % by weight of Solbesso 100 (petroleum type solvent produced by Exxon Kagaku) and 5 % by weight of 2 -propanol, and the mixture was sufficiently stirred in a mixer. After stirring was finished, the mixture was applied by a bar coater #8 onto an aluminum metal plate treated with chromate, dried and baked at 200°C for 4 minutes in a gas oven, and then subjected to past treatment with hot water at 80°C for 30 minutes. The resultant film was measured for its dynamic coefficient of friction under a 1-kg load.

As the polyethylene wax used in Comparative Example 10.3, Polywax 725 (polyethylene produced by Baker Petrolite) subjected to dispersion treatment in the same manner as in Example 2 was used.

**Table 10**

| Number | Composite resin (B) | Amount (weight %) | Coefficient of friction |
|---|---|---|---|
| Example 10.1 | Example 2.1 | 2 | 0.039 |
| Example 10.2 | Example 2.2 | 2 | 0.044 |
| Example 10.3 | Example 2.3 | 2 | 0.065 |
| Example 10.4 | Example 2.4 | 2 | 0.084 |
| Example 10.5 | Example 2.5 | 2 | 0.021 |
| Example 10.6 | Example 2.6 | 2 | 0.028 |
| Example 10.7 | Example 2.7 | 2 | 0.033 |
| Example 10.8 | Example 2.8 | 2 | 0.022 |
| Example 10.9 | Example 2.9 | 2 | 0.026 |
| Example 10.10 | Example 2.10 | 2 | 0.038 |
| Example 10.11 | Example 2.11 | 2 | 0.029 |
| Example 10.12 | Example 2.16 | 2 | 0.028 |
| Example 10.13 | Example 2.17 | 2 | 0.026 |
| Example 10.14 | Example 2.18 | 2 | 0.024 |
| Example 10.15 | Example 2.19 | 2 | 0.032 |
| Example 10.16 | Example 2.5 | 0.3 | 0.042 |
| Example 10.17 | Example 2.5 | 1 | 0.034 |
| Example 10.18 | Example 2.5 | 20 | 0.063 |
| Example 10.19 | Example 2.5 | 35 | 0.066 |
| Comparative example 9.1 | None | 0 | 0.185 |
| Comparative example 9.2 | Comparative example 2.1 | 2 | 0.118 |
| Comparative example 9.3 | PE wax | 2 | 0.099 |
| Comparative example 9.4 | palm wax | 2 | 0.152 |

### Example 11

### Evaluation of the polyurethane composite resin (C) as a lubricant

The composite resin synthesized and dispersed in 2-propanol in Example 3 was mixed in the described amount (in terms of solids content of the composite resin) with a coating for metal consisting of 20 % by weight of ACRYLOID AT-400 (acryl resin produced by ROHM & HAAS), 20 % by weight of GARGILL 5770 (polyester resin produced by GARGILL) , 20 % by weight of Mycoat 106 (amino resin produced by Mitsui Sci-tec) , 20 % by weight of butyl Cellosolve, 15 % by weight of Solbesso 100 (petroleum type solvent produced by Exxon Kagaku) and 5 % by weight of 2-propanol, and the mixture was sufficiently stirred in a mixer. After stirring was finished, the mixture was applied by a bar coater #8 onto an aluminum metal plate treated with chromate, dried and baked at 200°C for 4 minutes in a gas oven, and then subjected to past treatment with hot water at 80°C for 30 minutes. The resultant film was measured for its dynamic coefficient of friction under a 1-kg load.

As the polyethylene wax used in Comparative Example 11.3, Polywax 725 (polyethylene produced by Baker Petrolite) subjected to dispersion treatment in the same manner as in Example 2 was used.

**Table 11**

| Number | Composite resin (C) | Amount (weight %) | Coefficient of friction |
|---|---|---|---|
| Example 11.1 | Example 3.1 | 2 | 0.052 |
| Example 11.2 | Example 3.2 | 2 | 0.046 |
| Example 11.3 | Example 3.3 | 2 | 0.055 |
| Example 11.4 | Example 3.4 | 2 | 0.058 |
| Example 11.5 | Example 3.5 | 2 | 0.067 |
| Example 11.6 | Example 3.6 | 2 | 0.074 |
| Example 11.7 | Example 3.7 | 2 | 0.048 |
| Example 11.8 | Example 3.8 | 2 | 0.045 |
| Example 11.9 | Example 3.9 | 2 | 0.053 |
| Example 11.10 | Example 3.10 | 2 | 0.039 |
| Example 11.11 | Example 3.11 | 2 | 0.044 |
| Example 11.12 | Example 3.21 | 2 | 0.051 |
| Example 11.13 | Example 3.22 | 2 | 0.054 |
| Example 11.14 | Example 3.23 | 2 | 0.066 |
| Example 11.15 | Example 3.24 | 2 | 0.048 |
| Example 11.16 | Example 3.25 | 2 | 0.046 |
| Example 11.17 | Example 3.26 | 2 | 0.049 |
| Example 11.18 | Example 3.27 | 2 | 0.058 |
| Example 11.19 | Example 3.28 | 2 | 0.049 |
| Example 11.20 | Example 3.29 | 2 | 0.056 |
| Example 11.21 | Example 3.7 | 0.3 | 0.080 |
| Example 11.22 | Example 3.7 | 1 | 0.056 |
| Example 11.23 | Example 3.7 | 20 | 0.063 |
| Example 11.24 | Example 3.7 | 35 | 0.082 |
| Comparative example 11.1 | None | 0 | 0.185 |
| Comparative example 11.2 | Comparative example 3.1 | 2 | 0.123 |
| Comparative example 11.3 | PE wax | 2 | 0.099 |
| Comparative example 11.4 | palm wax | 2 | 0.152 |

### Example 12

### Evaluation and drying temperature of the composite resins (A to B) as a lubricant

The composite resin synthesized and dispersed in 2-propanol in each of Examples 1 and 2 was mixed in an amount of 2 % by weight (in terms of solids content of the composite resin) with a coating for metal consisting of 20 % by weight of ACRYLOID AT-400 (acryl resin produced by ROHM & HAAS), 20 % by weight of GARGILL 5770 ( polyester resin produced by GARGILL), 20 % by weight of Mycoat 106 (amino resin produced by Mitsui Sci-tec), 20 % by weight of butyl Cellosolve, 15 % by weight of Solbesso 100 ( petroleum type solvent produced by Exxon Kagaku) and 5 % by weight of 2-propanol, and the mixture was sufficiently stirred in a mixer. After stirring was finished, the mixture was applied by a bar coater #8 onto an aluminum metal plate treated with chromate, dried and baked in a gas oven at a temperature (unit: °C) for a period (unit: min . ) shown in Table 7, and then subjected to past treatment with hot water at 80°C for 30 minutes . The resultant film was measured for its dynamic coefficient of friction under a 1-kg load.

**Table 12**

| Number | Composite resin | Temperature (°C) | Time (min) | Coefficient of friction |
|---|---|---|---|---|
| Example 12.1 | Example 1.6 | 40 | 120 | 0.132 |
| Example 12.2 | Example 1.6 | 80 | 90 | 0.096 |
| Example 12.3 | Example 1.6 | 150 | 15 | 0.042 |
| Example 12.4 | Example 1.6 | 200 | 4 | 0.035 |
| Example 12.5 | Example 1.6 | 270 | 2 | 0.039 |
| Example 12.6 | Example 2.5 | 40. | 120 | 0.126 |
| Example 12.7 | Example 2.5 | 80 | 90 | 0.087 |
| Example 12.8 | Example 2.5 | 150 | 15 | 0.033 |
| Example 12.9 | Example 2.5 | 200 | 4 | 0.021 |
| Example 12.10 | Example 2.5 | 270 | 2 | 0.038 |
| Comparative example 12.1 | palm oil | 40 | 120 | 0.233 |
| Comparative example 12.2 | palm oil | ₈₀ | ₉₀ | _{0.196} |
| Comparative example 12.3 | palm oil | 150 | 15 | 0.149 |
| Comparative example 12.4 | palm oil | 200 | 4 | 0.12 |
| Comparative example 12.5 | palm oil | 270 | 2 | 0.160 |

### Example 13

### Evaluation of the polyester composite resin (A) as an abrasion resistance improver

The composite resin synthesized and dispersed in 2-propanol ( 25 % by weight of solids content) in Example 1 was mixed in the described amount (in terms of solids content of the composite resin) with KL424 (solvent type polyurethane) produced by Arakawa Kagaku, and the mixture was sufficiently stirred in a mixer. After stirring was finished, the mixture was applied by a bar coater #5 onto a biaxially oriented PET film (corona treatment) and dried with a drier.

As the polyethylene wax used in Comparative Example 13.3, Polywax 725 (polyethylene produced by Baker Petrolite) subjected to dispersion treatment in the same manner as in the Examples was used.

A vibration-resistant, abrasion-resistance testing machine (loading 500 g, reciprocated 100 times, against fine paper) was used to evaluate abrasion resistance. The abrasion resistance was evaluated under the following 5 ranks:
5: not changed; 4: partially marred; 3: totally marred; 2: the film was partially peeled off; and 1: the whole of the film was peeled off.

**Table 13**

| Number | Composite resin (A) | Amount (weight %) | Evaluation |
|---|---|---|---|
| Example 13.1 | Example 1.5 | 2 | 4 |
| Example 13.2 | Example 1.6 | 2 | 4 |
| Example 13.3 | Example 1.7 | 2 | 4 |
| Comparative example 13.1 | None | 0 | 1 |
| Comparative example 13.2 | Comparative example 3.1 | 2 | 1 |
| Comparative example 13.3 | PE wax | 2 | 2-3 |
| Comparative example 13.4 | Palm wax | 2 | 2 |

### Example 14

### Evaluation of the composite resin as an acid-resistance improver in a molding material

The composite resin synthesized and dispersed in 2-propanol in Example 1 was powdered after removing and drying the 2-propanol at room temperature under reduced pressure. The resultant composite resin powder was kneaded in the described amount at 230°C with Acrypet V (molding acryl resin produced by Mitsubishi Rayon) in a twin-screw extruder and formed into a sheet of 5 mm in thickness at 230°C by an extrusion-molding machine. The resultant sheet was cut into a test specimen of 8 cm in width and 20 cm in height . This test specimen was examined in an exposure test for 240 hours with a carbon ark sunshine weather meter equipped with a water spray (water jetting time was 12 minutes every 1 hour). Further, the test specimen after exposure was dipped in 5 N aqueous sulfuric acid, left therein for 24 hours at room temperature, removed and washed with water. The degree of damage to the surface by the acid was evaluated with the naked eyes under the following 5 ranks.

5: not changed; 4: turned slightly turbid; 3: turned turbid; 2: turned strongly turbid; and 1: the surface became satinized.

As the polyethylene wax used in Comparative Example 14.3, Polywax 725 (polyethylene produced by Baker Petrolite) subjected to dispersion treatment in the same manner as in the Examples and powdered in the same manner as in this example was used.

**Table 14**

| Number | Composite resin (A) | Amount (weight %) | Evaluation |
|---|---|---|---|
| Example 14.1 | Example 1.5 | 5 | 4 |
| Example 14.2 | Example 1.6 | 5 | 4 |
| Example 14.3 | Example 1.7 | 5 | 4 |
| Comparative example 14.1 | None | 0 | 1 |
| Comparative example 14.2 | Comparative example 3.1 | 5 | 1 |
| Comparative example 14.3 | PE wax | 5 | 2 |

As described above, the polyester or polyurethane composite resin obtained by chemically bonding a hydrocarbon moiety to polyester or polyurethane serves as an excellent surface modifier by incorporating the composite resin into a film-coating material such as ink or paint or into a molding material. Further, this modifier can improve not only the interface between the film-forming material or the like and a base material but also the surface of the film-forming material, that is, the interface between the film-forming material and the air.

It follows that in the former case, the improver of this invention can endow materials (polyolefin materials) conventionally poor in adhesion with high adhesion or an improvement of adhesion effects without using a chloride or an unsaturated carboxylic acid-modified polyolefins required in the prior art.

In the latter case, the modifier of this invention can confer characteristics such as lubricating properties, mar resistance, water repellency and chemical resistance on the surface thereby exhibiting a high interface modification effect with the interface modifier being hardly lost from the surface. That is, the interface modifier of this invention can be used to maintain the interface modification effect under conventional severe conditions such as treatment with hot water and high friction.

## Claims

1. A composite resin prepared by reacting a monool (a) containing a C₂₅₋₂₀₀ hydrocarbon group; a multifunctional compound (G) containing a functional group capable of reacting with a hydroxyl group of the monool (a); and a compound (H) having a functional group capable of reactingwith the functional group in the multifunctional compound (G).

2. The composite resin according to claim 1, which is a polyester composite resin prepared by reacting a monool (a) containing a C₂₅₋₂₀₀ hydrocarbon group; a polybasic acid (b); and a multivalent alcohol (c).

3. The composite resin according to claim 1, which is a polyester composite resin prepared by reacting a monool (a) containing a C₂₅₋₂₀₀ hydrocarbon group; a carboxylic acid anhydride (d); and an epoxy group-containing compound (e).

4. A polyurethane composite resin prepared by reacting a monool (a) containing a C₂₅₋₂₀₀ hydrocarbon group; a multifunctional isocyanate compound (f); and a multivalent alcohol (g).

5. An interface modifier comprising the composite resin described in any one of claims 1 to 4.

6. A film-forming material comprising a major material and the interface modifier described in claim 5.

7. A laminate comprising the film-forming material of claim 6 applied on a polyolefin base material.

8. A molding material comprising a major material and the interface modifier of claim 5 incorporated therein.
